Europäisches Patentamt

European Patent Office

Office européen des brevets

(19)

(11) Publication number: **0 064 815**

**B1**

(12) **EUROPEAN PATENT SPECIFICATION**

(45) Date of publication of patent specification: **14.08.85**

(51) Int. Cl.⁴: **B 60 R 1/06**

(21) Application number: **82301898.1**

(22) Date of filing: **13.04.82**

(54) Remotely-controlled rear-view mirror.

(30) Priority: **07.05.81 GB 8113879**

(43) Date of publication of application:
**17.11.82 Bulletin 82/46**

(45) Publication of the grant of the patent:
**14.08.85 Bulletin 85/33**

(84) Designated Contracting States:
**DE FR GB**

(56) References cited:
**DE-B-2 927 936**
**US-A-3 575 496**

(73) Proprietor: **BRITAX (WINGARD) LIMITED**
**Chandler Road**
**Chichester Sussex, PO19 2UG (GB)**

(72) Inventor: **Bottrill, John**
**"Moelfre" 9 Langdale Avenue**
**Chichester West Sussex (GB)**

(74) Representative: **Hollinghurst, Antony**
**Britax Central Services 40 Granby Avenue**
**Garretts Green Birmingham, B33 OSJ (GB)**

Courier Press, Leamington Spa, England.

## Description

This invention relates to a remotely-controlled rear-view mirror assembly of the type in which a reflective member is mounted so as to be tiltable within a casing about two mutually perpendicular axes, a remote control being connected by a linkage to the reflective member to cause such tilting movement. The reflective member is usually the mirror secured to a backing plate having points of attachment.

In some assemblies of the above type, the reflective member is not entirely stable on its pivot point or tilting support. It is, therefore, generally found necessary to provide some form of stabilization between the reflective member and the case. Such stabilization commonly takes the form of spring-loaded stabilisers which engage with the inner surface of the case. This arrangement suffers from the disadvantage of increased drag since the stabilisers provide friction additional to that which is inherent in the pivotal mounting.

According to the invention, a remotely-controlled rear-view mirror assembly comprises a housing, part of the inner surface of which is of part-spherical concave shape and a reflective member mounted on a carrier which has a part-spherical convex surface of the same radius as that of said part of the inner surface of the housing, and first and second elements of a pivot point bearing being mounted on the housing and on the carrier respectively, the first element being fixedly mounted with its bearing surface located at the centre of curvature of the spherical surfaces and the second element being slidably mounted for movement radially with respect to the spherical surfaces and resiliently biased into engagement with the first element.

An embodiment of the invention will now be described by way of an example, with reference to the accompanying drawings, in which:

Figure 1 is a partially broken away view of a mirror assembly in accordance with the invention from behind the mirror surface of the reflective member;

Figure 2 is a cross-sectional view taken on the line 2—2 in Figure 1;

Figures 3 and 4 are fragmentary views, similar to Figure 2, of alternative coupling arrangements for the remote-control mechanism.

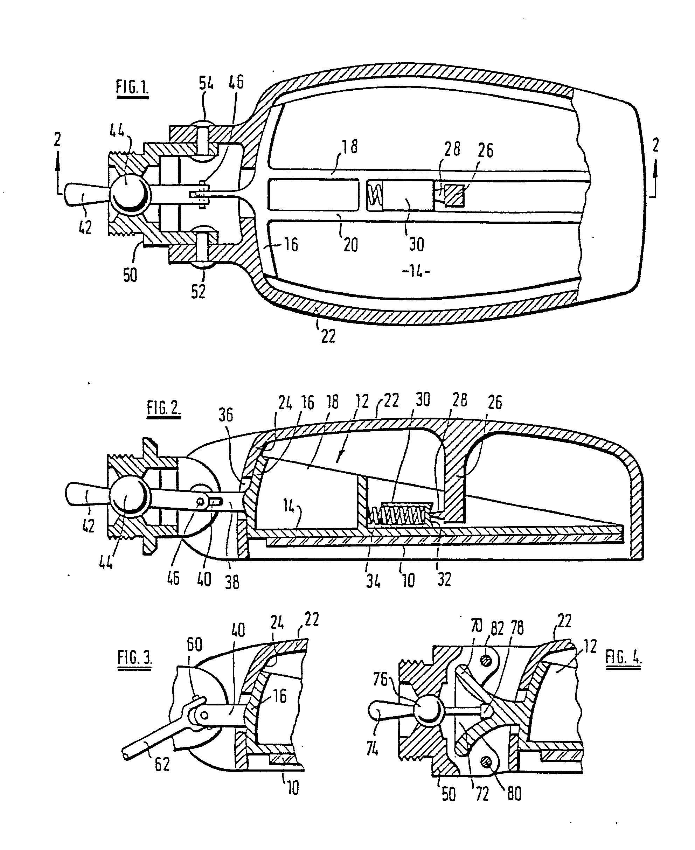

Referring to Figures 1 and 2, the assembly comprises a reflective member 10 which is fixed to a carrier 12, having a flat mirror-bearing portion 14, a part-spherical arcuate portion 16 at one end of the mirror-bearing portion 14 and two triangular mutually parallel reinforcing ribs 18 and 20. The mirror 10 and carrier 12 are mounted in a housing 22, part of the inner surface of which is comprises a part-spherical region 24 of the same radius of curvature as the portion 16 of the carrier 12. The housing 22 has a generally central inwardly extending projection 26, which carries a point bearing 28, located at the centre of curvature of the two part-spherical surfaces 16 and 24.

A slider 30 is located between the ribs 18 and 20 and has a concave end face 32, which is urged into engagement with the point bearing 28 by a compression spring 34 so as to press the two part-spherical surfaces 16 and 24 into engagement with each other.

The part-spherical surface 24 in the housing 22 has a centrally disposed aperture 36, through which projects a lever 38, secured to the arcuate portion 16. The outer end of the lever 38 contains a slot 40. A manually operable control lever 42 has a central spherical bearing 44 and carries a pin 46 which engages in the slot 40 on one end. By moving the other end of the lever 42, the reflective member 10 can be pivoted in any direction about the pivot point 28. Since the entire periphery of the arcuate member 16 is in contact with the spherical surface 24, the reflective member 10 remains stable in the position in which it is set.

The spherical bearing 44 is mounted in a boss 50. The boss 50 can be mounted on a motor vehicle so that the free end of the lever 42 projects into the passenger compartment. In order to guard against impact, the housing 22 is coupled to the boss 50 by a single axis breakaway mechanism of known type, the breakaway axis formed by rivets 52 and 54 being coincident with the axis of the pin 46 when the latter is in its central position. Should breakaway take place when the pin 46 is not in its central position, the latter merely moves along the slot 40 without becoming disengaged therefrom.

Figure 3 illustrates an alternative coupling arrangement in which the lever 40 is connected by a universal joint 60 to a rod 62. Movement of the mirror 10 about the axis perpendicular to the plane of the drawing is effected by pushing or pulling the rod 62 axially while movement about the other axis is effected by angular movement of the rod 62.

Figure 4 illustrates yet another alternative arrangement suitable for use with two-axis breakaway mechanism. The lever 40 is replaced by a member 70, having a bell-shaped recess 72 in its free end. An operating lever 74, mounted in a spherical bearing 96, has a projection 78 which in normal use, engages in the bottom of the bell-shaped recess 72. During breakaway about either of the axes 80 and 82, the projection 78 becomes disengaged from the recess 72 but, when the mirror assembly is restored to its normal position, the projection 78 is "captured" by the wide mouth of the recess 72.

## Claims

1. A remotely controlled rear-view mirror assembly comprising a housing (22) and a reflective member mounted on a carrier (12) located within the housing (22), characterised in that part of the inner surface (24) of the housing (22) is of part-spherical concave shape and the carrier (12) has a part-spherical convex surface (16) of the same radius as that of said part (24) of the inner

surface of the housing (22), first and second elements (28, 32) of a pivot-point bearing being mounted on the housing (22) and on the carrier (12) respectively, the first element (28) being fixedly mounted with its bearing surface located at the centre of curvature of the spherical surfaces (16, 24) and the second element (32) being slidably mounted for movement radially with respect to the spherical surfaces (16, 24) and resiliently biased into engagement with the first element (28).

2. A mirror assembly according to claim 1, characterised in that the first element (28) of the pivot-point bearing is fixed relative to the housing (22) and the second element (32) of the pivot-point bearing is slidably mounted on the carrier (12) and resiliently biased away from the spherical surfaces (16, 24).

3. A mirror assembly according to claim 2, characterised in that the first element of the pivot-point bearing comprises a pin (28) and the second element has a concave bearing surface (32).

4. A mirror assembly according to claim 1, 2 or 3, characterised in that the housing (22) is pivotally connected to a base member (50) for angular movement about a vertical axis (52, 54) and the carrier (12) is coupled to an operating lever (42) by a universal joint (46) coincident with said vertical axis (52, 54).

5. A mirror assembly according to claim 1, 2 or 3, characterised in that the housing (22) is pivotally connected to a base member (50) by means of a two-axis breakaway mechanism and the carrier (12) is coupled to an operating lever (74) by engagement of a projection (78) in a recess (72) located between the axes (80, 82) of the breakaway mechanism so as to be disengaged in the event of breakaway about either axis.

**Revendications**

1. Assemblage de rétroviseur télécommandé comprenant un boîtier (22) et un élément réfléchissant monté sur un support (12) logé dans le boîtier (22), caractérisé en ce qu'une partie de la surface intérieure (24) du boîtier (22) présente une forme concave en portion de sphère et le support (12) une surface convexe en forme de portion de sphère (16) de même rayon que ladite partie (24) de la surface intérieure de l'enveloppe (22), des premier et second éléments (28, 32), d'un moyen d'appui comprenant une pointe formant pivot montés sur l'enveloppe (22) et sur le support (12) respectivement, le premier élément (28) étant monté fixe avec sa surface d'appui au centre de courbure des surfaces sphériques (16, 24) et le second élément (32) étant monté coulissant pour se déplacer radialement par rapport aux surfaces sphériques (16, 24) et pressé élastiquement contre le premier élément (28).

2. Assemblage de rétroviseur selon la revendication 1, caractérisé en ce que le premier élément (28) du palier à pointe formant pivot est fixe par rapport au boîtier (22) et le second élément (32) du moyen d'appui à pointe formant pivot est monté coulissant sur le support (12) et sollicité élastiquement à l'opposé des surfaces sphériques (16, 24).

3. Assemblage de rétroviseur selon la revendication 2, caractérisé en ce que le premier élément du moyen d'appui à pointe formant pivot est constitué par un doigt (28) et le second élément présente une surface portante concave (32).

4. Assemblage de rétroviseur selon la revendication 1, 2 ou 3, caractérisé en ce que le boîtier (22) est articulé sur une embase (50) pour se déplacer angulairement autour d'un axe vertical (52, 54) et le support (12) est accouplé à un levier de manoeuvre (42) par un cardan (46) coïncidant avec ledit axe vertical (52, 54).

5. Assemblage de rétroviseur selon la revendication 1, 2 ou 3, caractérisé en ce que le boîtier (22) est articulé sur une embase (50) au moyen d'un mécanisme de dégagement à deux axes et le support (12) est accouplé à un levier de manoeuvre (74) par engagement d'un prolongement (78) dans un logement (72) situé entre les axes (80, 82) du mécanisme de dégagement de façon à se trouver libéré en cas de dégagement autour de l'un ou l'autre des axes.

**Patentansprüche**

1. Ferngesteuerte Rückspiegelvorrichtung, die aus einem Gehäuse (22) und aus einem auf einem in diesem Gehäuse (22) angeordneten Rahmen (12) angebrachten reflektierenden Teil besteht, dadurch gekennzeichnet, daß ein Teil der Innenfläche (24) des Gehäuses (22) von teilweise sphärischer konkaver Form ist und der Rahmen (12) eine teilweise sphärische konvexe Fläche (16) des gleichen Radius wie der des Bereichs (24) der Innenfläche des Gehäuses (22) aufweist, daß erste und zweite Elemente (28, 32) jeweils am Gehäuse (22) und am Rahmen (12) befestigt sind, wobei das erste Element (28) derart befestigt ist, daß seine Lagerfläche im Krümmungsmittelpunkt der sphärischen Flächen (16, 24) liegt, und wobei das zweite Element (32) derart verschiebbar befestigt ist, daß es sich radial bezüglich der sphärischen Flächen (16, 24) bewegen kann und in federndem Eingriff mit dem ersten Element (28) vorgespannt ist.

2. Spiegelvorrichtung nach Anspruch 1, dadurch gekennzeichnet, daß das erste Element (28) des Spitzenlagers fest am Gehäuse (22) und das zweite Element (32) des Spitzenlagers verschiebbar am Rahmen (12) angebracht und federnd in Richtung von den sphärischen Flächen (16, 24) weg vorgespannt ist.

3. Spiegelvorrichtung nach Anspruch 2, dadurch gekennzeichnet, daß das erste Element des Spitzenlagers einen Zapfen (28) und das zweite Element eine konkave Lagerfläche (32) aufweist.

4. Spiegelvorrichtung nach Anspruch 1—3, dadurch gekennzeichnet, daß das Gehäuse (22) drehbar mit einem Grundelement (50) verbunden ist, um sich um eine senkrechte Achse (52, 54) verschwenken zu können, und daß der Rahmen (12) mit einem Betätigungshebel (42) mittels eines Kadangelenks (46) verbunden ist, das mit der senkrechten Achse (52, 54) fluchtet.

5. Spiegelvorrichtung nach Anspruch 1—3, dadurch gekennzeichnet, daß das Gehäuse (22) mittels eines zweiachsigen Abklappmechanismusses mit einem Grundgelement (50) verbunden ist, und daß der Rahmen (12) an einen Betätigungshebel (74) gekoppelt ist, indem eine Nase (78) in eine Vertiefung (72) zwischen den Achsen (80, 82) des Abklappmechanismusses derart eingreift, daß diese im Falle eines Abklappens um eine der Achsen außer Eingriff geraten.

FIG. 1.

FIG. 2.

FIG. 3.

FIG. 4.